(19) Europäisches Patentamt
European Patent Office
Office européen des brevets

(11) Veröffentlichungsnummer: **0 280 978 B1**

(12) **EUROPÄISCHE PATENTSCHRIFT**

(45) Veröffentlichungstag der Patentschrift: **22.05.91**

(51) Int. Cl.[5]: **A01N 47/22**, //(A01N47/22, 47:18)

(21) Anmeldenummer: **88102523.3**

(22) Anmeldetag: **20.02.88**

Die Akte enthält technische Angaben, die nach dem Eingang der Anmeldung eingereicht wurden und die nicht in dieser Patentschrift enthalten sind.

# (54) Verwendung von 2-(2-Chlor-1-methoxy-ethoxy)-phenyl-methylcarbamat als Molluskizid.

(30) Priorität: **27.02.87 DE 3706358**

(43) Veröffentlichungstag der Anmeldung: **07.09.88 Patentblatt 88/36**

(45) Bekanntmachung des Hinweises auf die Patenterteilung: **22.05.91 Patentblatt 91/21**

(84) Benannte Vertragsstaaten: **BE CH DE FR GB IT LI NL**

(56) Entgegenhaltungen:
**FR-A- 2 192 097**
**GB-A- 2 168 897**

**CHEMICAL ABSTRACTS, Band 103, Nr. 3, 1985, Zusammenfassung Nr. 18352w, Columbus, Ohio, US; G.C. SCOTT et al.: "Seed treatments for controlling slugs in winter wheat", & PROC. - BR. CROP PROT. CONF.--PESTS DIS., (1),133-8**

**C.R. WORTHING et al.: "The pesticide manual", siebente Auflage, 1983, Seite 133, The British Crop Protection Council, Croydon, GB**

(73) Patentinhaber: **BASF Aktiengesellschaft**
**Carl-Bosch-Strasse 38**
**W-6700 Ludwigshafen(DE)**

(72) Erfinder: **Kiehs, Karl, Dr.**
**Sudetenstrasse 22**
**W-6840 Lampertheim(DE)**
Erfinder: **Kuenast, Christoph, Dr.**
**Muehlstrasse 21**
**W-6701 Waldsee(DE)**

**EP 0 280 978 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von 2-(2-Chlor-1-methoxy-ethoxy)-phenyl-methylcarbamat zur Bekämpfung von Mollusken, insbesondere von landbewohnenden und amphibischen Schnecken.

Es ist bereits bekannt, daß verschiedene organische Verbindungen, z.B. Methaldehyd und 4-Methylthio-3,5-dimethylphenyl-N-methylcarbamat, zur Schneckenbekämpfung eingesetzt werden können, und verschiedene andere N-Methylcarbamate auf Schnecken eine immobilisierende oder teilweise auch eine geringe abtötende Wirkung haben können [L.W. Getzin and S.G. Cole, Evaluation of potential Molluscicides for slug control, Washington Agr. Exp. Sta. Bull. Vol. 658, (1964); P.J. Hunter and D.L. Johnston, J. Econ. Entomol. Vol. 63, 305-306, (1970)]. Diese Wirkung ist aber für die Anwendung z.B. in der Landwirtschaft zu gering. Dies gilt auch für eingeführte Handelsprodukte, z.B. solche, die 2-(1-Methyl-ethoxy)-phenyl-N-methylcarbamat (Getzin, Cole, Tabelle 3, S. 6) enthalten.

Schnecken sind in gemäßigten, subtropischen und tropischen Pflanzenkulturen bedeutende Schädlinge. Neue Anbautechniken, insbesondere die reduzierte Bodenbearbeitung (no tillage und minimum tillage) führen zu erhöhten Schneckenfraßschäden. Da viele Schneckenarten ihrer Ökologie nach ubiquitär sind, haben sich solche Arten in Gegenden, in denen sie ursprünglich nicht vorkommen ausgebreitet (z.B. Achatina fulica aus Ostafrika in Australien und Nordamerika).

Es wurde gefunden, daß das aus DE-C-22 31 249 als insektizider Wirkstoff bekannte 2-(2-Chlor-1-methoxy-ethoxy)-phenyl-methylcarbamat (Cloethocarb) überraschenderweise ausgeprägte molluskizide Eigenschaften, vorzugsweise bei Nackt- und Gehäuseschnecken besitzt; es eignet sich hervorragend zur Schneckenbekämpfung in landwirtschaftlichen und gärtnerischen Pflanzenkulturen.

Ferner wurde gefunden, daß der fungizide Wirkstoff Methyl-benzimidazol-2-ylcarbamat (Carbendazim) in Kombination mit Cloethocarb bei der Bekämpfung von Mollusken einen synergistischen Effekt bewirkt. Dieser Effekt tritt auf, wenn das Gewichtsverhältnis Cloethocarb : Carbendazim von 0,01:1 bis 50:1, vorzugsweise 1:1 bis 30:1, insbesondere 10:1 bis 20:1 beträgt.

Die molluskizide Wirkung von Cloethocarb und Kombinationen aus Cloethocarb und Carbendazim erstreckt sich auf landbewohnende und amphibische Schnecken, z.B. solche der Gattungen Deroceras (Agriolimax), Limax, Helix, Helicogona, Cepaea, Milax, Lymnaea (Galba), Achatina, Theba, Cochlicella, Helicarion, Vaginulus. Zu den Schadschnecken gehören z.B. die Nacktschnecken (slugs) Arion ater, A. lusitanicus, A. hortensis, Agriolimax reticulatus, Limax flavus, L. maximus, Milax gagates, Mariaella dursumierei, Helicarion salius, Vaginula hedleyi, Pamarion pupillaris sowie die Gehäuseschnecken (snails), Helix aspersa spp., Cepaea Nemoralis, Theba pisana, Achatina fulica, A. zanzibarica, Limicolaria Kambeul, Bradybaena spp. Cochlodina spp, Helicella spp., Euomphalia spp.

Geeignete Formulierungen für Molluskizide sind z.B. in der DE-A-3 503 608 und der DE-A-3 500 468 beschrieben; sie erfordern i.a. ein Trägermaterial, einen Fraßstoff bzw. ein Lockmittel, ein Bindemittel und den Wirkstoff.

Als (feste) Trägerstoffe kommen in Frage z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoff für Granulate kommen z.B. gebrochene und fraktionierte natürliche Gesteine wie Calcit, Marmor, Bims, Sepiolith, Dolomit, synthetische Granulate aus anorganischen und organischen Mehlen sowie Granulate aus organischem Material wie Sägemehl, Kokosnußschalen, Maiskolben und Tabakstengel, in Betracht.

Besonders vorteilhaft ist die Vermischung mit Fraßködern wie Getreideprodukten (z.B. Weizen-, Hafer-, Gerste-, Roggen-, Mais-, Reis als Körner, Mehl, Schrot, Kleie, Keime, Brot), Ölkuchen (z.B. von Baumwollsaat, Erdnüssen, Sonnenblumen, Mohnsaat), Malz, Hefen, Zuckerrübenmelasse, Obstpressrückständen oder mit art- oder schneckenspezifischen Lockstoffen, jeweils unter Verwendung geeigneter Bindemittel und Haftmittel, geeigneter Stabilisatoren und mikrobieller Hemmstoffe; zugesetzt werden vorteilhaft Stoffe die für Vögel und Säuger fraßabschreckend wirken und organische oder anorganische Farbstoffe bzw. Pigmente. Solche Zusätze haben den Zweck, Nichtzielorganismen abzuschrecken und die Wirkung über einen möglichst langen Zeitraum sichern.

Eine andere bevorzugte Anwendungsform ist die Saatgutbeizung mit einer für Beizungen üblichen Formulierung.

Der Wirkstoffgehalt in einzelnen Anwendungsformen kann in weiten Grenzen variieren, z.B. im Bereich von 0,001 bis 90 Gew.%, vorzugsweise 1 bis 10 Gew.% bei Kornformulierungen und 10 bis 90 Gew.% bei Saatgutbeizen.

Die Aufwandmeng an Wirkstoff beträgt 0,3 bis 30 kg/ha, vorzugsweise 1 bis 10 kg/ha.

Formulierungsbeispiel 1

In einem Mischer werden 2 kg Cloethocarb, 8 kg Calciumstearat, 0,2 kg Natriumbenzoat, 20 kg Kreide, 0,5 kg blauer Farbstoff und 69,3 kg Weizenkleie gemischt. Diese Mischung wird anschließend in einem Kneter mit ausreichend Wasser befeuchtet und geknetet. Danach wird die feuchte Mischung in einem Extruder zu Schneckenködergranulat mit einem Durchmesser von 3 mm geformt und bei maxiaml 60° C getrocknet.

Formulierungsbeispiel 2

Zur Herstellung einer Saatgutbeize werden gemischt:
480 g Cloethocarb
20 g handelsübliches Phenolsulfonsäure-Harnstoff-Formaldehyd-Kondensat
40 g Ethylen-Propylen-Blockcopolymerisat mit einem Molgewicht von 10.000
2 g Xanthan-Gummi
0,5 g Rhodamin FB
80 g 1,2-Propylenglykol
5 g Silikon-Antischaummittel
und mit Wasser auf 1 Liter aufgefüllt.

Anwendungsbeispiel 1

Flache Plastikwannen (40x55 cm) werden mit feuchter, gedämpfter Erde gefüllt, darauf 100 g Salatblätter gelegt. In Reihenversuchen werden pro Gefäß 18 Schnecken (Geschlechtsreife Individuen von Arion lusitanicus) eingesetzt, 0,15 g Schneckenkorn-Granulat regelmäßig über die Erde verteilt und die Wannen mit Plastiknetzen verschlossen. Im Abstand von 1 bzw. 3 Tagen werden tote und geschädigte Tiere ausgezählt; das durchschnittliche Ergebnis ist in der folgenden Tabelle enthalten, wobei die Zahlen die jeweiligen Prozentzahlen der betroffenen Individuen der Reihenversuche bedeuten. "Tote" Schnecken sind solche, die keine Reaktion auf Berührungsreiz geben und "geschädigte" Schnecken solche, die äußerlich erkennbare Schädigungen aufweisen, aber auf Berührungsreiz noch reagieren.

Tabelle 1

| Anzahl der Tage | 1 | | 2 | | 3 | | 6 | |
|---|---|---|---|---|---|---|---|---|
| Zustand | tot | geschädigt | tot | geschädigt | tot | geschädigt | tot | geschädigt |
| Methaldehyd-Schneckenkorn | 0 | 10 | 0 | 5-10 | 0 | 10-20 | 0 | 10-20 |
| Cloethocarb-Schneckenkorn | 0 | 70-80 | 10-20 | 50-60 | 50 | 20-30 | 80-90 | 10-20 |
| Kontrolle | 0 | 0 | 0 | 0 | 0 | 0 | 0 | 0 |

Anwendungsbeispiel 2

Die Wirkung des fungiziden Wirkstoffs Carbendazim als Zusatz zu Cloethocarb wurde untersucht. Dabei wurde mit einer Formulierung, enthaltend 4 Gew.% Cloethocarb und 0,2 Gew.% Carbendazim, eine

bemerkenswerte Steigerung gegenüber der Wirkung von Cloethocarb beobachtet. Durchführung und Auswertung entsprechen Anwendungsbeispiel 1. Die Ergebnisse sind in Tabelle 2 zusammengefaßt.

Tabelle 2

| Anzahl der Tage | 1 | | 2 | | 3 | | 6 | | 7 | |
|---|---|---|---|---|---|---|---|---|---|---|
| Zustand | tot | geschädigt | tot | geschädigt | tot | geschädigt | tot | geschädigt | tot | geschädigt |
| 4 Gew.% Cloethocarb | 5,6 | 38,9 | 38,9 | 5,6 | 61,1 | - | 83,3 | - | 83,3 | - |
| 4 Gew.% Cloethocarb + 0,2 Gew.% Carbendazim | - | 44,4 | 88,9 | 11,1 | 94,4 | 5,6 | 100 | - | 100 | - |

Anwendungsbeispiel 3

Vergleich zwischen 3,5-Dimethyl-4-methylmercapto-phenyl-N-methylcarbamat (Handelsprodukt gegen Schnecken; Kurzbezeichnung Mercaptodimethur) und Cloethocarb (Kontaktversuch; Sofortwirkung)

Versuchsdurchführung:

Schneckenkorn, das wie in Beispiel 1 angegeben erhalten wurde, wurde im Mörser fein vermahlen, die Menge (bezogen auf Wirkstoffgehalt) in einer Petrischale (Durchmesser 10 cm) verteilt. 5 Schnecken (Arion ater) wurden eingesetzt, nach 5 h wurde die prozentuale Schädigungsrate bestimmt.

| g Wirkstoff/ Petrischale | 0,01 | 0,006 | 0,004 | 0,001 | 0,0006 | Kontolle |
|---|---|---|---|---|---|---|
| Mercaptodimethur | 100 | 0 | 0 | 0 | 0 | 0 |
| Cloethocarb | 100 | 100 | 80-100 | 20-40 | 0 | 0 |

## Ansprüche

1. Verwendung von 2-(2-Chlor-1-methoxy-ethoxy)-phenyl-methylcarbamat der Formel

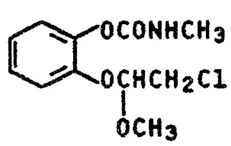

zur Bekämpfung von Mollusken.

2. Verwendung von 2-(2-Chlor-1-methoxy-ethoxy)-phenyl-methylcarbamat zur Bekämpfung von landbewohnenden und amphibischen Schnecken.

3. Verwendung von 2-(2-Chlor-1-methoxy-ethoxy)-phenyl-methylcarbamat nach Anspruch 1, dadurch gekennzeichnet, daß es in Kombination mit Methyl-benzimidazol-2-ylcarbamat angewendet wird.

4. Verfahren zur Bekämpfung von Mollusken, dadurch gekennzeichnet, daß man die vor Mollusken zu schützenden Pflanzen und/oder ihre Umgebung mit 2-(2-Chlor-1-methoxy-ethoxy)-phenyl-methylcarbamat behandelt.

5. Verfahren zum Schutz von landwirtschaftlichen und gärtnerischen Kulturpflanzen gegen Mollusken, dadurch gekennzeichnet, daß man die zu schützenden Pflanzen und/oder ihre Umgebung mit 2-(2-Chlor-1-methoxy-ethoxy)-phenyl-methylcarbamat behandelt.

6. Schneckenfraßköder welche neben dem Wirkstoff ein Trägermaterial, einen Fraßstoff bzw. ein Lockmittel und ein Bindemittel enthalten, dadurch, gekennzeichnet daß als Wirkstoff 2-(2-chlor-1-methoxy-ethoxy)-phenyl-methyl-carbamat verwendet wird.

## Claims

1. Use of 2- (2-chloro-1-methoxyethoxy)phenyl methylcarbamate of the formula

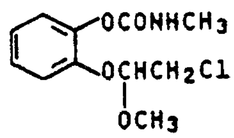

for controlling molluscs.

2. Use of 2-(2-chloro-1-methoxyethoxy)phenyl methylcarbamate for controlling terrestrial or amphibious snails or slugs.

3. Use of 2-(2-chloro-1-methoxyethoxy)phenyl methylcarbamate as claimed in claim 1 in combination with methyl benzimidazol-2-ylcarbamate.

4. A method for controlling molluscs, wherein the plants to be protected from molluscs, or the environment of the said plants, are treated with 2-(2-chloro-1-methoxyethoxy)phenyl methylcarbamate.

5. A method for protecting agricultural crops and horticultural plants from molluscs, wherein the plants to be protected, or the environment of the said plants, are treated with 2-(2-chloro-1-methoxyethoxy)-phenyl methylcarbamate.

6. A snail and slug bait which contains, in addition to the active ingredient, a carrier, an edible substance or a bait, and a binder, wherein the active ingredient used is 2-(2-chloro-1-methoxyethoxy)phenyl methylcarbamate.

## Revendications

1. Utilisation du méthylcarbamate de 2-(2-chloro-1-méthoxy-éthoxy)-phényle de formule

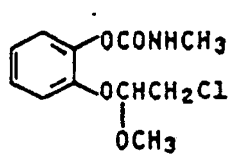

pour combattre les mollusques.

2. Utilisation du méthylcarbamate de 2-(2-chloro-1-méthoxy-éthoxy)-phényle pour combattre les gastéropodes terrestres et amphibies.

3. Utilisation du méthylcarbamate de 2-(2-chloro-1-méthoxy-éthoxy)-phényle selon la revendication 1, caractérisée en ce qu'on l'applique en combinaison avec du benzimidazole-2-yl-carbamate de méthyle.

4. Procédé pour combattre les mollusques, caractérisé en ce que l'on traite les végétaux à protéger contre les mollusques et/ou leur environnement par du méthylcarbamate de 2-(2-chloro-1-méthoxy-éthoxy)-phényle.

5. Procédé pour protéger les végétaux cultivés dans l'agriculture et l'horticulture contre les mollusques, caractérisé en ce que l'on traite les plantes à protéger et/ou leur environnement par du méthylcarbamate de 2-(2-chloro-1-méthoxy-éthoxy)-phényle.

6. Piège alimentaire pour gastéropodes, contenant, outre la substance active, une matière de support, une matière alimentaire ou appât et un liant, caractérisé en ce que la substance active est du méthylcarbamate de 2-( 2-chloro-1-méthoxy-éthoxy)-phényle.